(19) **Europäisches Patentamt / European Patent Office / Office européen des brevets**

(11) **EP 2 548 704 B1**

(12) **EUROPEAN PATENT SPECIFICATION**

(45) Date of publication and mention of the grant of the patent:
**25.02.2015 Bulletin 2015/09**

(21) Application number: **11755914.6**

(22) Date of filing: **16.03.2011**

(51) Int Cl.:
**B25J 11/00** *(2006.01)*    **B25J 19/00** *(2006.01)*

(86) International application number:
**PCT/JP2011/001535**

(87) International publication number:
**WO 2011/114723 (22.09.2011 Gazette 2011/38)**

(54) **PARALLEL LINK ROBOT AND METHOD OF TEACHING PARALLEL LINK ROBOT**

PARALLELROBOTER UND VERFAHREN ZUM EINLERNEN EINES PARALLELROBOTERS

ROBOT PARALLÈLE ET PROCÉDÉ D'APPRENTISSAGE D'UN ROBOT PARALLÈLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2010 JP 2010060583**

(43) Date of publication of application:
**23.01.2013 Bulletin 2013/04**

(73) Proprietor: **Panasonic Corporation Kadoma-shi Osaka 571-8501 (JP)**

(72) Inventors:
• **KUBO, Hiroyasu Osaka 540-6207 (JP)**
• **KATSUKI, Satoshi Osaka 540-6207 (JP)**
• **SUEFUJI, Nobuyuki Osaka 540-6207 (JP)**

(74) Representative: **Grünecker, Kinkeldey, Stockmair & Schwanhäusser Leopoldstrasse 4 80802 München (DE)**

(56) References cited:
FR-A1- 2 880 575     JP-A- 6 270 077
JP-A- 11 058 287     JP-A- 2000 079 586
JP-A- 2000 120 824   JP-A- 2003 052 716
JP-A- 2004 130 441   JP-A- 2009 050 921

**Description**

[Technical Field]

The present invention relates to robot mechanisms mainly intended for industrial use. Particularly, the present invention relates to a parallel link robot according to the preamble of claim 1, having a structure in which a base to which the robot is fixed and a movable body to which a working member such as an end effector is attached are connected by a plurality of arms. Such a robot is known from FR-A-2 880 575.

[Background Art]

A parallel link robot generally includes: a fixing plate that is a base to which the robot is fixed; a movable plate that is a movable body to which a working part such as the end effector is attached; and a link mechanism that connects these. The link mechanism includes an arm and a rod. The arm is attached to the fixing plate to allow a unique in-plane swivel around a unique axis. The rod and the arm are connected by a bearing (joint) that freely swivels within a space, such as a ball joint. Each arm and rod, while being connected and bound by the movable plate, can also change a position and attitude in the space. By controlling a rotation position of the arm, using a driving unit such as a motor, it is possible to control the position and attitude of the movable plate. Generally, the rod often has an outwardly-extended structure as viewed from the fixing plate because the attitude control tends to be unstable at a position in which the arm and the rod are aligned.

Suggested for the parallel link robot is a method of controlling the movable plate face at six freedom levels through independent control of a 6-axis motor; for example, see JP-A-06270077 (Patent Literature 1).

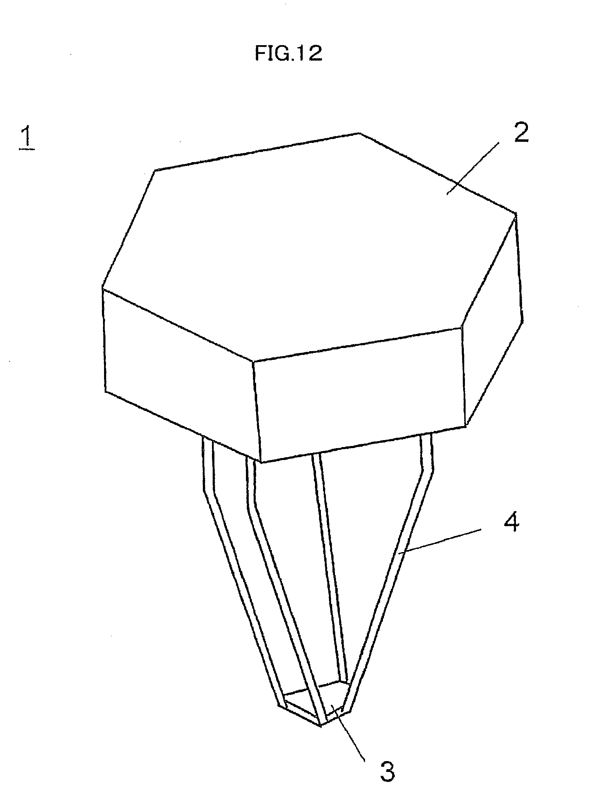

Fig. 12 is an outline perspective view of the parallel link robot disclosed in Patent Reference 1. Fig. 12 shows a parallel link robot 1 in which a fixing plate 2 and a movable plate 3 are connected by an arm 4. The parallel link robot 1 controls an automatic operation of the movable plate 3 by controlling the position and attitude of the arm 4.

As an operation teaching method for teaching automatic operation of the movable plate 3 to such a parallel link robot 1, a method of controlling the movable plate 3 using an operation panel and a method of providing pseudo teaching using simulator software are suggested.

FR 2 880 575 A1 relates to a robot having actuators connecting a base unit and a movable unit. A load balancing unit is coupled to the base unit and the movable unit for balancing load exerted on the movable unit.

[Summary of Invention]

[Technical Problem]

However, the parallel link robot in Patent Literature 1 has a problem of not allowing intuitive performance of appropriate teaching because it is difficult to perform fine tuning of strength when the control of the movable plate 3 is performed through the operation panel and so on. To deal with this, a direct teaching method is suggested which is a method of manual teaching by directly touching the movable plate 3 with a human hand; however, when a servo is powered OFF for safety, the human hand directly receives approximately 1 kg weight that is a weight of the movable plate 3 and the arm 4. This approximately 1 kg weight of the movable plate 3 and the arm 4, when directly loaded onto the human hand, is too heavy for continuous teaching by human hand, thus presenting a problem of causing more fatigue when performing the teaching operation while supporting these movable plate 3 and arm 4 with a human hand. Thus, the conventional parallel link robot has a problem of not allowing intuitive performance of appropriate and highly accurate teaching.

An object of the present invention is to solve such a conventional problem and provide a parallel link robot and a parallel link robot teaching method that realize intuitive performance of appropriate and highly accurate teaching.

[Solution to Problem]

To achieve the above object, a parallel link robot according to an aspect of the present invention includes all of features of claim 1.

The object is also achieved by the method according to claim 10.

[Advantageous Effects of Invention]

As described above, according to the present invention, it is possible to realize a parallel link robot and a parallel link robot teaching method that allow intuitive performance of appropriate and highly accurate teaching.

[Brief Description of Drawings]

[Fig. 1] Fig. 1 is an outline perspective view of a parallel link robot according to a first embodiment of the present invention.

[Fig. 2] Fig. 2 is an outline lateral view of the parallel link robot according to the first embodiment of the present invention.

[Fig. 3] Fig. 3 is an outline perspective view of a parallel link robot according to a second embodiment of the present invention.

[Fig. 4] Fig. 4 is an outline lateral view of the parallel link robot according to the second embodiment.

[Fig. 5] Fig. 5 is an outline perspective view of a parallel link robot according to a third embodiment of the present invention.

[Fig. 6] Fig. 6 is an outline lateral view of the parallel link robot according to the third embodiment.

[Fig. 7] Fig. 7 is a schematic diagram for describing a power relationship at a time when a tilt mechanism tilts in the third embodiment.

[Fig. 8] Fig. 8 is a diagram showing a mechanism unit and a function unit of a parallel link robot according to a fourth embodiment of the present invention.

[Fig. 9] Fig. 9 is a diagram schematically showing a detected state of engagement between a first engagement portion and a second engagement portion in the fourth embodiment

[Fig. 10] Fig. 10 is a diagram schematically showing a detected state of engagement between the first engagement portion and the second engagement portion in the fourth embodiment.

[Fig. 11] Fig. 11 is a flowchart showing a teaching method.

[Fig. 12] Fig. 12 is an outline perspective view of a parallel link robot in Patent Literature 1.

[Description of Embodiments]

Hereinafter, embodiments of the present invention will be described with reference to the drawings. Note that in the following description, in some cases, the same reference sign is assigned to constituent elements having the same operation and function, and the description thereof is omitted.

[Embodiment 1]

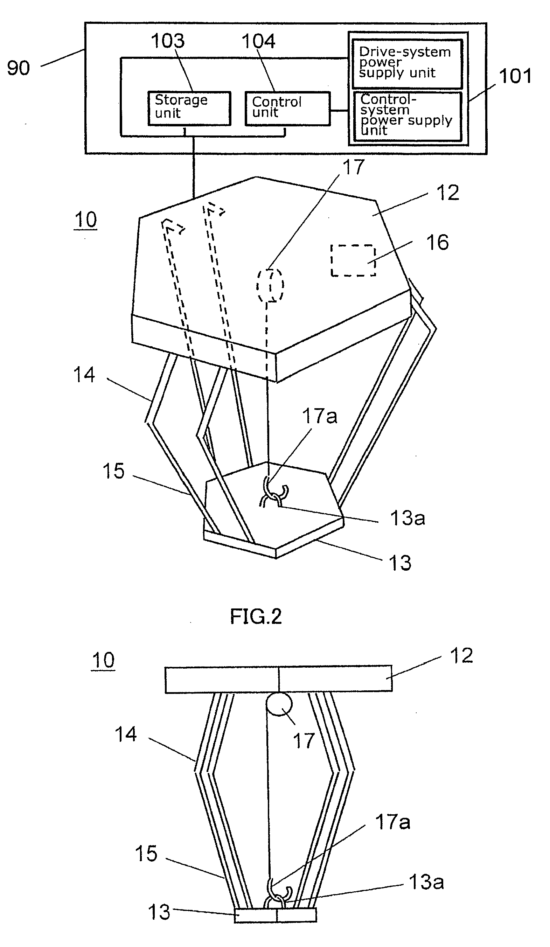

Fig. 1 is an outline perspective view of a parallel link robot according to a first embodiment of the present invention. Fig. 2 is an outline lateral view of the parallel link robot according to the first embodiment of the present invention. Note that in Fig. 1, a main part of an unseen portion behind the fixing plate that is an example of the base is illustrated with dashed lines. In addition, in Fig. 2, illustrations of the arm and the rod at the back of the drawing surface are omitted.

In Figs. 1 and 2, a parallel link robot 10 according to the first embodiment includes: a fixing plate 12 that is an example of the base to which the robot body is fixed; a movable plate 13 that is an example of the movable body to which a working member such as an end effector (for example, a work robot hand) is attached; and three link mechanisms that connect the fixing plate 12 and the movable plate 13. Each link mechanism includes: an arm 14, a rod 15, and a joint. Note that the arm 14 and the rod 15 are connected by the joint, but the joint is not illustrated in Figs. 1 to 6. Note that a flex portion between the arm 14 and the rod 15 corresponds to the joint.

The arm 14 is attached to the fixing plate 12 to allow a unique in-plane swivel around a unique axis.

The rod 15 and the arm 14 are connected by the joint (bearing) that freely swivels within a space, such as a ball joint. In addition, the rod 15 and the movable plate 13 are connected by a bearing that freely swivels within a space, such as a ball joint. Each arm 14 and rod 15, while having its position and attitude bound by the movable plate 13, can also change the position and attitude in the space.

In the case of the first embodiment, the position and attitude of the movable plate 13 are controlled by controlling a rotational position of the arm 14, using a drive source 16 such as a motor included in the fixing plate 12. The figure shows only one drive source 16, but the drive source 16 is provided for each link mechanism in the present embodiment. Specifically, the drive source 16 is provided for each arm 14 and rod 15, and the parallel link robot 10 includes six drive sources 16. Note that it is possible to provide three drive sources 16, depending on the configuration.

Furthermore, the parallel link robot 10, as shown as a functional configuration in Fig. 1, includes a control device 90. The control device 90 is a device that controls driving of the parallel link robot 10 as an example of the functional configuration, and includes: a power supply unit 101, a storage unit 103, and a control unit 104.

The power supply unit 101 includes a drive-system power supply unit that supplies power to the drive source 16 and a brake 18, and a control-system power supply unit that supplies power to a detector 41.

The storage unit 103 is a processing unit which receives a signal from an encoder provided in the drive source 16, and stores, as operation information, an operating status of the movable plate 13 moved by an operator's hand and so on.

The control unit 104 is a processing unit which causes a mechanism unit of the parallel link robot 10 to operate, by controlling the drive source 16 based on the operation information stored in the storage unit 103.

In addition, generally, since an attitude control of the movable plate 13 becomes unstable at a position at which the arm 14 and the rod 15 are aligned, the parallel link robot 10 is often configured such that the arm 14 and the rod 15, as viewed from the vertical top, extend toward outside the fixing plate 12.

The parallel link robot 10 according to the first embodiment further connects the fixing plate 12 and the movable plate 13 and includes a suspension unit 17. The suspension unit 17 adds, to the movable plate 13, a force that resists gravity by extending and contracting the suspension unit 17 itself. In the present embodiment, the suspension unit 17 includes a constant load spring and a wire. Furthermore, the suspension unit 17 includes, at one end thereof, a hook 17a that is an example of a second engagement portion which is freely attachable to and detachable from a hook fixing portion 13a that is an example of a first engagement portion provided in the movable plate 13. This hook 17a connects the fixing plate 12 and the movable plate 13, thus allowing holding, detachably and attachably, the movable plate 13 in midair. The suspension unit 17, even in a static state, is designed to pull the movable plate 13 to some extent toward the vertical top via the wire, with a biasing force of the constant load spring. In addition, the suspension unit 17 is extended and contracted by the constant load spring winding off and rewinding the wire when a distance between the movable plate 13 and the fixing plate 12 changes as a result of shifting the movable plate 13, thus allowing constantly holding the movable plate 13 in midair . Here, "to pull the movable plate 13 to some extent toward the vertical top" means a case where an apparent weight of the movable plate 13 becomes zero (0) or a case where the apparent weight of the movable plate 13 decreases.

Note that regardless of whether the state is in operation or teaching, the fixing plate 12 and the movable plate 13 may be constantly connected. In this case, it is not necessary to provide the hook 17a for attaching and detaching the suspension unit 17 to and from the movable plate 13, and the suspension unit 17 is directly fixed to the hook fixing portion 13a. The suspension unit 17, when directly fixed, cannot be removed during operation, but this decreases a possibility of the hook 17a coming off due to an accident. Thus, it is possible to hold the movable plate 13 in midair more stably, using the suspension unit 17 that is directly fixed.

In addition, an internal mechanism of the suspension unit 17 is not only limited to a configuration formed with the constant load spring but may also be configured with a combination of a pulley and a balance weight.

There are many types of industrial robots such as a scalar type robot and a perpendicular articulated robot, but holding top portions of these robots in midair requires a large-scale mechanism due to a wide movable range. For this reason, it is normally impossible to consider adopting, for a general industrial robot, such a configuration as described in the first embodiment. On the other hand, in the case of the parallel link robot, the movable range remains within a constant radius based on below a center of the fixing plate 12, thus making it possible to realize a configuration that allows holding the movable plate 13 in midair toward the fixing plate 12. In other words, such a configuration according to the first embodiment is particularly useful for the case of the parallel link robot.

Use of the parallel link robot 10 according to the first embodiment allows moving the movable plate 13 with a small strength by human hand, even when the power of the drive source 16 on a fixing plate 12 side is in an OFF state (non-drive state). This is because the movable plate 13 is suspended from the fixing plate 12 by the suspension unit 17.

For example, assuming that the load on the movable plate 13 including the end effector is 1 kg, it is possible to take a vertical balance of the movable plate 13 when using a constant load spring that pulls the movable plate 13 by a force of 1 kgf, thus allowing holding the movable plate 13 in midair.

In addition, in some cases, when the joint and the like of the arm 14 have a small mechanical resistance, a slight imbalance of force vertically moves the movable plate 13. If this is the case, it is necessary to hold the movable plate 13 by hand or the like, but the parallel link robot 10 according to the first embodiment requires a very small strength for doing this, compared to the conventional case.

The parallel link robot 10 according to the first embodiment allows holding the movable plate 13 in midair by connecting the movable plate 13 and the fixing plate 12, using the suspension unit 17 including the constant load spring and so on inside. This allows moving, while ensuring safety, the movable plate up and down, back and forth, and right and left, with an extremely small strength. With this, the parallel link robot 10 according to the first embodiment allows intuitive teaching of subtle positioning and operation, thus allowing anyone to perform the teaching operation easily.

[Embodiment 2]

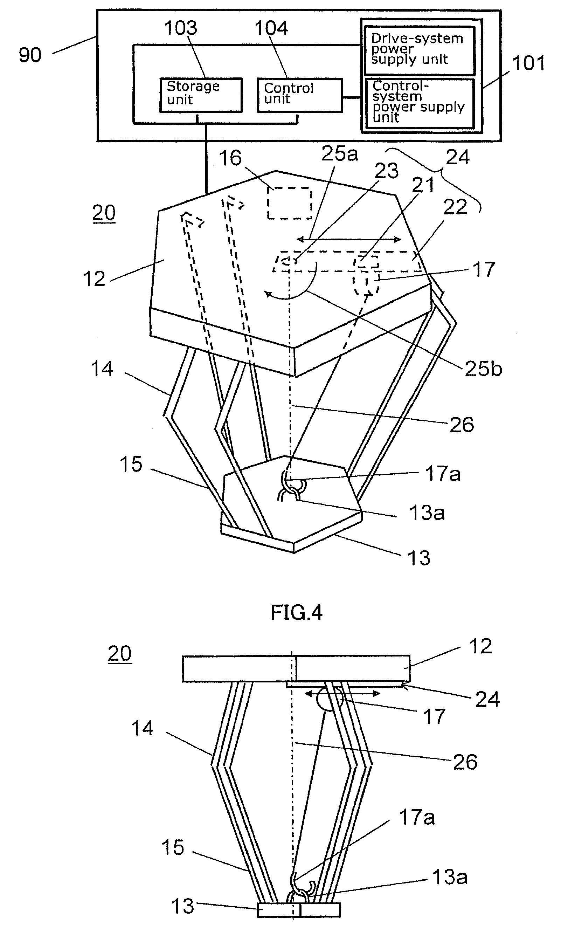

Fig. 3 is an outline perspective view of a parallel link robot according to a second embodiment of the present invention, and Fig. 4 is an outline lateral view of the parallel link robot according to the second embodiment. Note that in Fig. 3, a main part of an unseen portion behind the fixing plate that is an example of the base is illustrated with dashed lines. In addition, in Fig. 4, illustrations of the arm and the rod at the back of the drawing surface are omitted.

The parallel link robot 20 according to the second embodiment is different from the first embodiment described earlier in including a slide mechanism which allows moving, within a surface of the fixing plate 12, a support with which the suspension unit 17 is attached to the fixing plate 12. A slide mechanism 24 of the parallel link robot 10 according to the second embodiment includes: a slider 21 attached to the suspension unit 17; and a slide rail 22 along which the slider 21 slides in a (radius) direction indicated by an arrow 25a in a plane of the fixing plate 12. Furthermore, the slide rail 22 of the slide mechanism 24 is attached to the fixing plate 12 via the rotational axis 23 to allow the slide mechanism 24 to be rotatably attached to the fixing plate 12. Accordingly, the slide mechanism 24 including the slider 21 and the slide rail 22 is freely rotatable in the direction indicated by an arrow 25b, centering on the rotational axis 23. According to the second embodiment, by thus attaching the slide mechanism 24 to the fixing plate 12 centering on the rotational axis 23, it is possible to move the slider 21 to an almost vertical top side of the hook fixing portion 13a of the movable plate 13 even when the movable plate 13 is moved in a horizontal plane.

The mechanism according to the first embodiment as described above produces an advantageous effect of preventing the movable plate 13 from hanging loose vertically downward. However, the farther the center of the movable plate 13 moves away from the center axis 26 of the fixing plate 12, the more centripetal force acts in the movable plate 13, toward the center axis 26 of the fixing plate 12. In response, the mechanism according to the second embodiment produces an advantageous effect of suppressing this force using a simple configuration. This is because: as the movable plate 13 moves away from the center axis 26, the hook fixing portion 13a of the movable plate 13 accordingly moves away from the center axis 26, and this further causes the slider 21 to slide following the movement of the hook fixing portion 13a, to cause the slide rail 22 to rotate.

With the configuration according to the second embodiment, it is possible to suppress the force of the movable plate 13 moving toward the center axis 26, which force cannot be dealt with by the configuration of the first embodiment described above, thus allowing holding the movable plate 13 in midair. Thus, compared to the first embodiment described earlier, it is possible to achieve lightness in operating feeling when moving the movable plate 13 to a large extent for operation teaching.

[Embodiment 3]

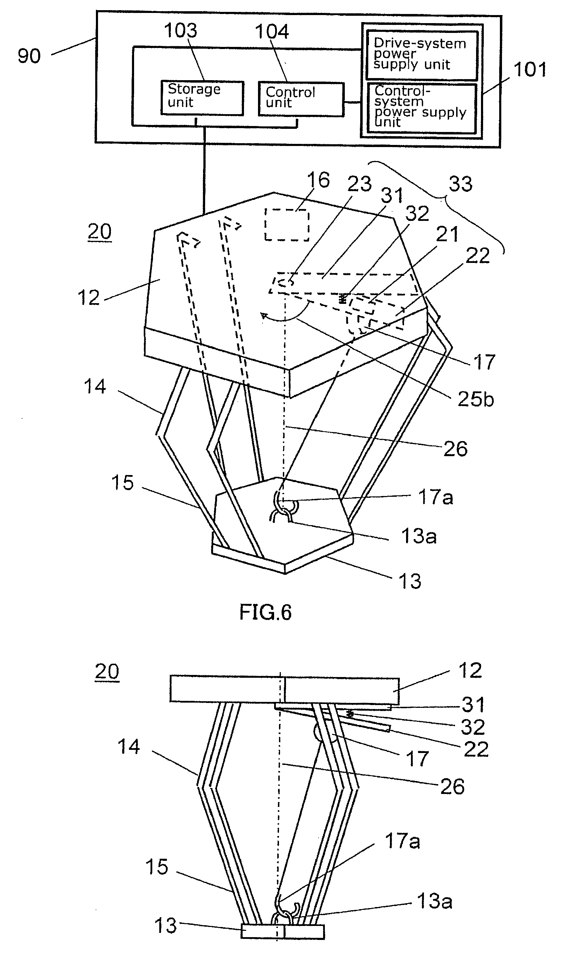

Fig. 5 is an outline perspective view of a parallel link robot according to a third embodiment of the present invention, and Fig. 6 is an outline lateral view of the parallel link robot according to the third embodiment. Note that in Fig. 5, a main part of an unseen portion behind the fixing plate that is an example of the base is illustrated with dashed lines. In addition, in Fig. 6, illustrations of the arm and the rod at the back of the drawing surface are omitted.

The parallel link robot 30 according to the third embodiment is different from the second embodiment described earlier in that the slide mechanism 24 in the second embodiment includes a slide-tilt mechanism 33 attached to the fixing plate 12 via a tilt mechanism. With this slide-tilt mechanism 33, the distance between the slider 21 and the fixing plate 12 increases as the slider 21 moves toward a peripheral portion (outer edge portion) of the fixing plate 12. Here, that "the distance between the slider 21 and the fixing plate 12 increases" means a decrease in a minimum distance between the slider 21 and the movable plate 13.

The slide-tilt mechanism 33 includes: a slider 21, a slide rail 22, a rotational axis 23, a rotation member 31, and a spring 32. The rotation member 31 is a member which rotates, integrally with the slide rail 22, in the direction indicated by the arrow 25b around the rotational axis 23. The spring 32 is a spring provided between the slide rail 22 and the rotation member 31. As the slider 21 moves away from near the rotational axis 23, the spring 32 expands to cause the slide mechanism 33 to tilt.

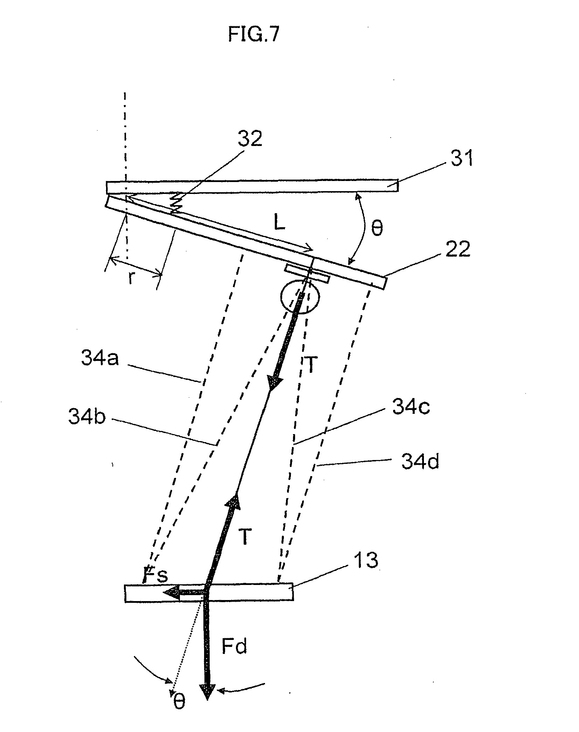

A physical power relationship when the slide-tilt mechanism 33 tilts is described with reference to Fig. 7. Fig. 7 is a diagram schematically showing a necessary part for describing this physical power relationship between the slide-tilt mechanism 33, the movable plate 13, and the suspension unit 17 in the third embodiment.

In Fig. 7, Fd is gravity generated in the movable plate 13, Fs is a centripetal force generated in the movable plate 13, and T is a tension between the movable plate 13 and the suspension unit 17. In addition, k is a spring multiplier of the spring 32, r is an attachment distance of the spring 32 (the distance between the rotational axis 23 and the spring 32), L is a distance from the rotational axis 23 to the slider 21, $\theta$ is an angle between the slide rail 22 and the rotation member 31. In this context, a relationship as represented by (Expression 1) is established as below.

$$T = \sqrt{(Fs^2 + Fd^2)} \dots (Expression\ 1)$$

Here, due to moment balancing, $k \times \theta \times r = L \times T$, so that a relationship as represented by (Expression 2) is established as below :

$$L = k \times \theta \times r/T = k \times r \times \arctan (Fs/Fd)/\sqrt{(Fs2 + Fd2)}...$$
(Expression 2)

In Fig. 7, the variation in attitude of the suspension unit 17 is represented by attitude 34a, 34b, 34c, and 34d.

The distance from the spring 32 becomes shorter when the movable plate 13 horizontally moves from side to side (to a position of attitude 34a or attitude 34c). This changes the position from the attitude 34a to the attitude 34b (or from the attitude 34c to the attitude 34d), so that the status settles into a balanced state.

Since this configuration using the suspension unit 17, the slide mechanism 22, and the slide-tilt mechanism 33 allows holding the movable plate 13 in midair, it requires only a small amount of strength to drive this, thus allowing the robot operation teaching easily. In other words, if it is possible to move the movable plate 13 with a minor strength by utilizing the state of the movable plate 13 being held in midair, it is possible to intuitively perform appropriate operation teaching while performing fine tuning of strength. A teaching position is appropriately recorded by reading an encoder signal and so on. It is possible to directly operate the movable plate 13 with a minor strength, by adopting, for example, one of the following methods appropriately.

Method 1 is a method of creating a non-drive state by turning off the servo of the motor or cutting off the link between the motor and the arm using a clutch mechanism, so as to allow direct operation of the movable plate with safety and without effort.

Method 2 is a method using a low-inertia moment motor of up to approximately $2 \times 10^{-3}$ kg·m$^2$ for driving the arm.

Method 3 is a method for avoiding a load onto the direct operation of the movable plate 13 without using a reduction gear, or using a gear of a gear ratio up to approximately 1 : 10 in the case of using the gear.

Since these Methods 1 to 3 allow the operator to perform operation while directly holding a vicinity of the movable plate, it is possible to intuitively teach the position and attitude of the parallel link robot, thus increasing convenience of the parallel link robot.

In addition, not only in teaching but also in normal operation, with use of such a configuration, it is possible to decrease a drive force in operating the parallel link robot, thus allowing a faster operation and a configuration using a smaller motor.

[Embodiment 4]

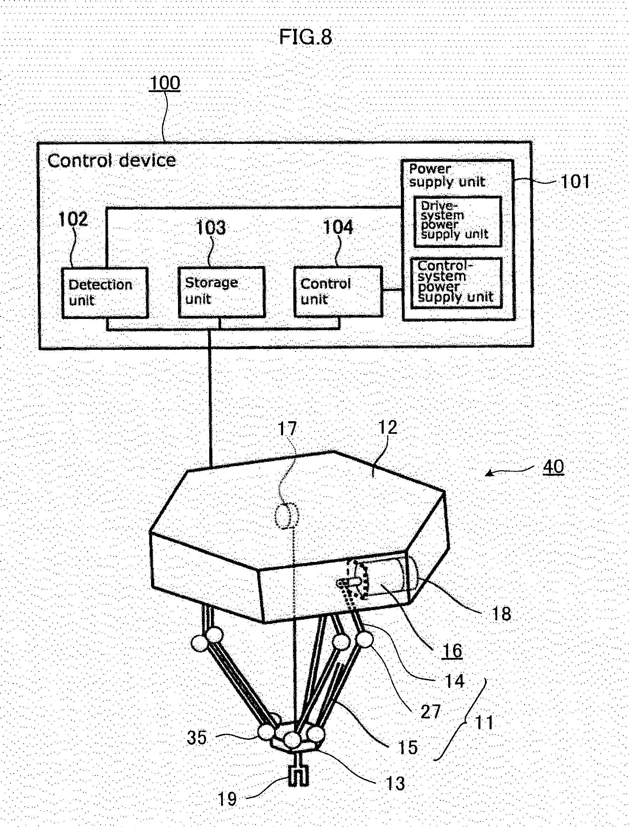

Fig. 8 is an outline perspective view of a parallel link robot and a parallel link robot control device according to a fourth embodiment of the present invention.

A parallel link robot 40 as shown in the figure includes: a fixing plate 12 that is an example of the base; a movable plate 13 that is an example of the movable body; a drive source 16; a link mechanism 11; a suspension unit 17; and a working member 19 such as an end effector.

The parallel link robot 40 includes six link mechanisms 11. Each link mechanism 11 includes: an arm 14, a joint 27, and a rod 15. In addition, each rod 15 is connected to the movable plate 13 via a bearing 35.

The drive source 16 includes a servo motor, and further includes a brake 18 that can fix a rotational axis of the motor to a servo-off state (a state where the servo motor is powered off). Note that Fig. 8 illustrates only one drive source 16, but the fixing plate 12 includes six drive sources 16 corresponding to the respective link mechanisms 11, and each drive source 16 includes the brake 18.

To the bottom face of the movable plate 13, the working member 19 such as the end effector is attached.

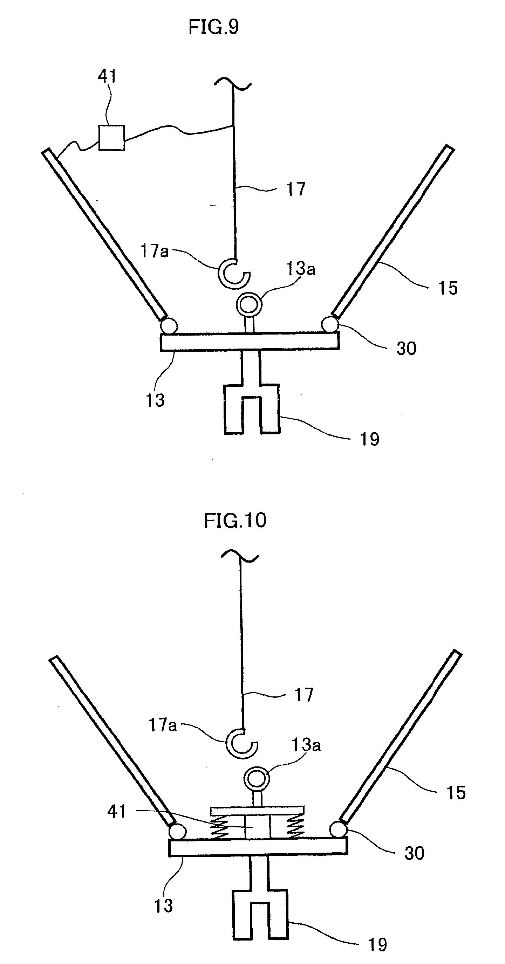

In addition, the parallel link robot 40, as shown in Fig. 9, includes: a hook fixing portion 13a that is an example of the first engagement portion; a hook 17a that is an example of the second engagement portion; and a detector 41 that detects an engagement state between the first engagement portion and the second engagement portion.

Furthermore, the parallel link robot 40, as shown as a functional configuration in Fig. 8, includes a control device 100. The control device 100 is a device that controls the drive of the parallel link robot 40 that is an example of the functional configuration, and includes: a power supply unit 101, a detection unit 102, a storage unit 103, and a control unit 104.

The power supply unit 101 includes a drive-system power supply unit that supplies power to the drive source 16 and the brake 18, and a control-system power supply unit that supplies power to the detector 41.

The detection unit 102 is a processing unit which receives a signal transmitted from the detector 41, judges whether or not the hook fixing portion 13a and the hook 17a are engaged, and transmits a signal indicating either one of the states.

In the case of the fourth embodiment, as shown in Fig. 9, the detector 41 detects that the hook fixing portion 13a and the hook 17 are engaged, from whether or not there is electrical conduction. Specifically, when the hook fixing portion 13a and the hook 17a are engaged, a closed circuit is formed by the rod 15, the movable plate 13, the suspension unit 17, and the detector 41. The detector 41 detects an electric current flowing in the closed circuit, and detects that the hook fixing portion 13a and the hook 17a are engaged (in an engagement state). Conversely, when no current is flowing in the closed circuit, the detector 41 detects that the hook fixing portion 13a and the hook 17a are not engaged. When buried in the arm 14 and the rod 15, the wire that is an example of a connection unit for connecting the detector 41 and the hook fixing portion 13a can be handled in the same manner as a normal parallel link robot. With a configuration as shown in Fig. 9, despite constraints on device configuration, it is possible to detect the engagement without separately providing another movable mechanism.

In addition, instead of the detector 41 and the wire, as shown in Fig. 10, it is possible to use a switch such as a microswitch which mechanically (mechanistically) detects the engagement between the hook fixing portion 13a and the hook 17a and converts the detected state into an electric signal. However, in this case, it is necessary to consider a mechanistic failure of the microswitch.

The storage unit 103 is a processing unit which receives a signal from an encoder provided in the joint 27 or the drive source 16 and stores, as operation information, an operating status of the movable plate 13 moved by an operator's hand and so on.

The control unit 104 is a processing unit which causes the mechanism unit of the parallel link robot 40 to operate, by controlling the drive source 16 based on the operation information stored in the storage unit 103.

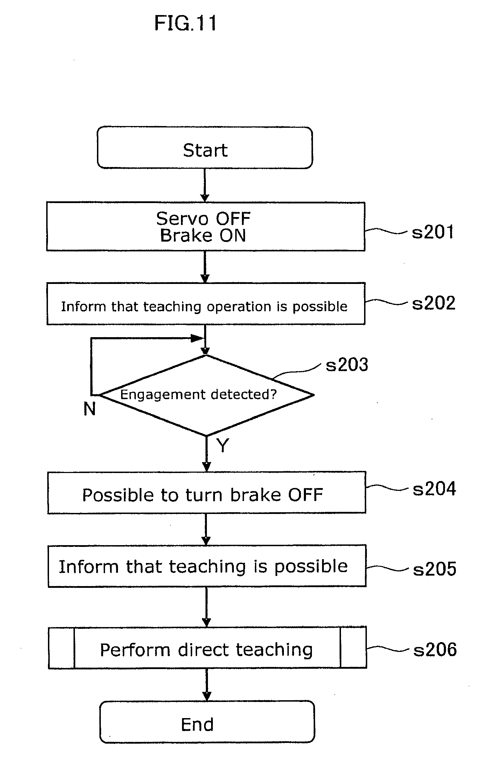

Fig. 11 is a flowchart showing a teaching method for the parallel link robot.

First, the power supply unit 101 turns the servo OFF by powering off the drive source 16 using the drive-system power supply unit, and applies the brake 18 to the drive source 16 (s201).

When the servo is turned OFF and the brake is turned ON (in a state where the brake 18 is applied), an operator and so on are informed that the teaching operation is possible (s202). The method of notification is not particularly limited, but may be performed by sound, indicating light, presentation on a control screen, and so on.

Next, the operator stretches the wire of the suspension unit 17 and attaches the hook 17 to the hook fixing portion 13a.

Then, when the detector 41 detects the engagement between the hook fixing portion 13a and the hook 17a, the detection unit 102 transmits, to the power supply unit 101 and so on, information that the engagement has been detected (s203: Y).

Note that during a period when the detector 41 does not detect the engagement between the hook fixing portion 13a and the hook 17a, loop occurs and the process flow does not proceed (s203: N).

Next, when the engagement between the hook fixing portion 13a and the hook 17a is detected (s203: Y), the state allows a brake off (a state in which a brake-OFF switch (not shown) for turning OFF the brake 18 is valid) (s204), thus allowing the link mechanism 11 to move freely. In addition, since the hook fixing portion 13a and the hook 17a are engaged, the suspension unit 17 holds the movable plate 13 in midair.

Next, it is informed that teaching is possible (s205), and the state allows teaching to the parallel link robot.

Next, the operator performs direct teaching. Specifically, the operator teaches a transfer path and an attitude of the movable plate 13 and so on by actually operating the movable plate 13 by hand. Since an apparent weight of the movable plate 13 is canceled by the suspension unit 17, the operator is able to perform the teaching operation, hardly feeling the weight of the movable plate 13.

In addition, the operating status of the movable plate 13 moved by the operator is transmitted to the storage unit 103 by the encoder provided in the drive source 16 and the joint 27, and the storage unit 103 stores a signal from the encoder as operation information.

Furthermore, once the teaching operation is finished, and the detector 41 detects the engagement between the hook fixing portion 13a and the hook 17a, the control unit 104 is ready to control the mechanism unit of the parallel link robot 40 based on the operation information stored in the storage unit 103.

Note that the present invention is not limited to the embodiments described above, but include variations through modifications appreciated by those skilled in the art within the scope of the appended claims.

In addition, execution of a program for causing a computer to execute each processing included in the teaching method is included in performance of the present invention. It goes without saying that performance through a recording medium on which the program is recorded is also included in the performance of the present invention.

[Industrial Applicability]

The present invention allows enhancing high-speed performance or directness in teaching when performing operation teaching on a parallel link robot. This enhances availability of the parallel link robot during operation teaching.

[Reference Signs List]

10, 20, 30, 40 Parallel link robot
11 Link mechanism
12 Fixing plate
13 Movable plate
13a Hook fixing portion
14 Arm
15 Rod
16 Drive source
17 Suspension unit
17a Hook
18 Brake
19 Working member
21 Slider
22 Slide rail
23 Rotational axis
24 Slide mechanism
25a, 25b Arrow
26 Center axis
27 Joint
31 Rotation member
32 Spring
33 Slide-tilt mechanism
34a, 34b, 34c, 34d Attitude
35 Bearing
90, 100 Control device
101 Power supply unit
102 Detection unit
103 Storage unit
104 Control unit

**Claims**

1. A parallel link robot comprising:

   a base (12);
   a movable body (13) provided vertically below the base (12);
   at least three link mechanisms (11) each of which connects the base (12) and the movable body (13) and includes a joint between the base (12) and the movable body (13);
   a drive source (16) which is provided in the base (12) and moves the movable body (13) relative to the base by flexing each of the at least three link mechanisms at the joint;
   a suspension unit (17) connecting the base (12) and the movable body (13) and configured to add, by extending and contracting the suspension unit itself, a force that resists gravity to the movable body; and
   **characterized by**
   a storage unit (103) configured to store an operation status of the movable body (13) in a state where the drive source is in a non-drive state as operation information for teaching.

2. The parallel link robot according to Claim 1, comprising
   a slide mechanism (24) with which an attachment support of the suspension unit (17) is slidably attached to the base (12), the attachment support allowing the suspension unit to be attached to the base (12).

3. The parallel link robot according to Claim 2,
   wherein the slide mechanism (24) is rotatably attached to a center of the base.

4. The parallel link robot according to any one of claims 1 to 3,
   wherein the suspension unit (17) is attached to the base via a tilt mechanism that tilts with respect to the base (12).

5. The parallel link robot according to claim 2,
   wherein the slide mechanism (24) is a mechanism of which a distance between the attachment support and the base increases as the attachment support approaches an outer edge portion of the base (12).

6. The parallel link robot according to any one of Claims 1 to 5,
   wherein the suspension unit (17) includes a constant load spring and a wire.

7. The parallel link robot according to any one of Claims 1 to 6, comprising:

   a first engagement portion provided in the movable body (13); and
   a second engagement portion provided in the suspension unit (17) and detachably engaged with the first engagement portion.

8. The parallel link robot according to Claim 7, comprising
   a detector (102) which detects an engagement state between the first engagement portion and the second engagement portion.

9. The parallel link robot according to Claim 8,
   wherein the detector (102) is configured to detect the engagement state by detecting a current in a closed circuit configured by an engagement between the first engagement portion and the second engagement portion.

10. A method of teaching a parallel link robot that includes: a base (12); a movable body (13) provided vertically below the base; at least three link mechanisms (11) each of which connects the base and the movable body and includes a joint between the base and the movable body; a drive source (16) which is provided in the base and moves the movable body relative to the base by flexing each of the at least three link mechanisms at the joint, and a suspension unit connecting the base (12) and the movable body (13) so that a force that resists gravity is added to the movable body by the suspension unit (17) extending and contracting itself, the method **characterized by** comprising storing, into a storage unit (103), an operating status of the movable body as operation information for teaching, in a state where the drive source is in a non-drive state.

11. The method of teaching a parallel link robot according to Claim 10,
    wherein the parallel link robot includes a detector (102) which detects an engagement state between the base and the movable body, the engagement state being created using the suspension unit (17), and
    the detector (102) turns the drive source into the non-drive state after detecting the engagement state between the base and the movable body, the engagement state being created using the suspension unit.

12. The method of teaching a parallel link robot according to Claim 11,
    wherein the detector (102) detects the engagement state by detecting a current flowing in a closed circuit configured by the engagement between the base and the movable body, the engagement state being created using the suspension unit.

**Patentansprüche**

1. Parallelroboter, umfassend:

   eine Basis (12);
   einen beweglichen Körper (13), der vertikal unter der Basis (12) vorgesehen ist;
   wenigstens drei Verbindungsmechanismen (11), von denen jeder die Basis (12) und den beweglichen Körper (13) verbindet und ein Gelenk zwischen der Basis (12) und dem beweglichen Körper (13) umfasst;
   eine Antriebsquelle (16), die in der Basis (12) vorgesehen ist und den beweglichen Körper relativ zu der Basis durch Beugen jedes der wenigstens drei Verbindungsmechanismen an dem Gelenk bewegt;
   eine Aufhängungseinheit (17), die die Basis (12) und den beweglichen Körper (13) verbindet und derart eingerichtet ist, dass sie durch Ausfahren und Einholen der Aufhängungseinheit an sich eine Kraft hinzufügt, die der Schwerkraft des beweglichen Körpers entgegenwirkt; und

**gekennzeichnet durch**

eine Speichereinheit (103), die dazu eingerichtet ist, einen Betriebsstatus des beweglichen Körpers (13) in einem Zustand, in dem sich die Antriebsquelle in einem nicht angetriebenen Zustand befindet, als Betriebsinformationen für die Unterweisung zu speichern.

2. Parallelroboter nach Anspruch 1, umfassend:

   einen Gleitmechanismus (24), mit dem eine Anbringungshalterung der Aufhängungseinheit (17) gleitfähig an der Basis (12) angebracht ist, wobei es die Anbringungshalterung der Aufhängungseinheit gestattet, an der Basis (12) angebracht zu werden.

3. Parallelroboter nach Anspruch 2,
   bei dem der Gleitmechanismus (24) drehbar an dem Zentrum der Basis angebracht ist.

4. Parallelroboter nach einem der Ansprüche 1 bis 3,
   bei dem die Aufhängungseinheit (17) an der Basis über einen Neigungsmechanismus angebracht ist, der sich in Bezug auf die Basis (12) neigt.

5. Parallelroboter nach Anspruch 2,
   bei dem der Gleitmechanismus (24) ein Mechanismus ist, bei dem ein Abstand zwischen der Anbringungshalterung und der Basis zunimmt, wenn sich die Anbringungshalterung dem Außenrandabschnitt der Basis (12) nähert.

6. Parallelroboter nach einem der Ansprüche 1 bis 5,
   bei dem die Aufhängungseinheit (17) eine Feder konstanter Federhärte und einen Draht umfasst.

7. Parallelroboter nach einem der Ansprüche 1 bis 6, umfassend:

   einen ersten Eingreifabschnitt, der in dem beweglichen Körper (13) vorgesehen ist; und
   einen zweiten Eingreifabschnitt, der in der Aufhängungseinheit (17) vorgesehen ist und lösbar mit dem ersten Eingreifabschnitt in Eingriff steht.

8. Parallelroboter nach Anspruch 7, umfassend
   einen Detektor (102), der einen Eingriffszustand zwischen dem ersten Eingreifabschnitt und dem zweiten Eingreifabschnitt erfasst.

9. Parallelroboter nach Anspruch 8,
   bei dem der Detektor (102) dazu eingerichtet ist, den Eingriffszustand durch Erfassen eines Stroms in einem geschlossenen Schaltkreis zu erfassen, der durch einen Eingriff zwischen dem ersten Eingreifabschnitt und dem zweiten Eingreifabschnitt hergestellt ist.

10. Verfahren zum Unterweisen eines Parallelroboters, der umfasst: eine Basis (12); einen beweglichen Körper (13), der vertikal unter der Basis vorgesehen ist; wenigstens drei Verbindungsmechanismen (11), von denen jeder die Basis (12) und den beweglichen Körper (13) verbindet und ein Gelenk zwischen der Basis und dem beweglichen Körper umfasst; eine Antriebsquelle (16), die in der Basis vorgesehen ist und den beweglichen Körper relativ zu der Basis durch Beugen jedes der wenigstens drei Verbindungsmechanismen an dem Gelenk bewegt; und eine Aufhängungseinheit, die die Basis (12) und den beweglichen Körper (13) verbindet, so dass eine Kraft, die der Schwerkraft entgegenwirkt, dem beweglichen Körper durch die Aufhängungseinheit (17) hinzugefügt wird, die sich selbst ausfährt und einholt, wobei das Verfahren **dadurch gekennzeichnet ist, dass** es umfasst:

    Speichern eines Betriebsstatus' des beweglichen Körpers in eine Speichereinheit (103) als Betriebsinformationen für die Unterweisung in einem Zustand, in dem sich die Antriebsquelle in einem nicht angetriebenen Zustand befindet.

11. Verfahren zum Unterweisen eines Parallelroboters nach Anspruch 10,
    wobei der Parallelroboter einen Detektor (102) umfasst, der einen Eingriffszustand zwischen der Basis und dem beweglichen Körper erfasst, wobei der Eingriffszustand mit Hilfe der Aufhängungseinheit (17) erzeugt wird, und der Detektor (102) die Antriebsquelle in den Nichtantriebszustand versetzt, nachdem er den Eingriffszustand zwischen der Basis und dem beweglichen Körper erfasst hat, wobei der Eingriffszustand mit Hilfe der Aufhängungseinheit erzeugt wird.

12. Verfahren zum Unterweisen eines Parallelroboters nach Anspruch 11,
bei dem der Detektor (102) den Eingriffszustand durch Erfassen eines Stromes erfasst, der in einem geschlossenen Schaltkreis fließt, der durch den Eingriff zwischen der Basis und dem beweglichen Körper erzeugt wird, wobei der Eingriffszustand mit Hilfe der Aufhängungseinheit erzeugt wird.

**Revendications**

1. Robot à liaison parallèle, comprenant :

- une base (12) ;
- un corps mobile (13) disposé verticalement au-dessous de la base (12) ;
- au moins trois mécanismes de liaison (11), dont chacun connecte la base (12) et le corps mobile (13) et inclut une jonction entre la base (12) et le corps mobile (13) ;
- une source d'entrainement (16) disposée dans la base (12) et déplaçant le corps mobile (13) relativement à la base (12) en fléchissant chacun des au moins trois mécanismes de liaison au niveau de la jonction ;
- une unité de suspension (17) connectant la base (12) et le corps mobile (13) et configurée pour ajouter, en étendant et en contractant l'unité de suspension elle-même, une force résistant à la gravité sur le corps mobile ; et
- **caractérisé en ce que :**
- une unité de stockage (103) configurée pour stocker un statut d'opération du corps mobile (13) dans un état dans lequel la source d'entrainement est dans un état de non entrainement en tant qu'informations d'opération pour un apprentissage.

2. Robot à liaison parallèle selon la revendication 1, comprenant :

- un mécanisme de coulisse (24) avec lequel un support d'attache de l'unité de suspension (17) est attaché de façon coulissante à la base (12), le support d'attache autorisant à l'unité de suspension d'être attachée à la base (12).

3. Robot à liaison parallèle selon la revendication 2 :

- dans lequel le mécanisme de coulisse (24) est attaché de façon rotative à un centre de la base.

4. Robot à liaison parallèle selon l'une quelconque des revendications 1 à 3 :

- dans lequel l'unité de suspension (17) est attachée à la base via un mécanisme d'inclinaison s'inclinant par rapport à la base (12).

5. Robot à liaison parallèle selon la revendication 2 :

- dans lequel le mécanisme de coulisse (24) est un mécanisme dont une distance entre le support d'attache et la base augmente à mesure que le support d'attache approche d'une partie de bord extérieur de la base (12).

6. Robot à liaison parallèle selon l'une quelconque des revendications 1 à 5 :

- dans lequel l'unité de suspension (17) inclut un ressort à charge constante et un câble.

7. Robot à liaison parallèle selon l'une quelconque des revendications 1 à 6, comprenant :

- une première partie d'engagement disposée dans le corps mobile (13) ; et
- une seconde partie d'engagement disposée dans l'unité de suspension (17) et engagée de façon amovible avec la première partie d'engagement.

8. Robot à liaison parallèle selon la revendication 7, comprenant :

- un détecteur (102) détectant un état d'engagement entre la première partie d'engagement et la seconde partie d'engagement.

9. Robot à liaison parallèle selon la revendication 8 :

   - dans lequel le détecteur (102) est configuré pour détecter un courant dans un circuit fermé configuré par un engagement entre la première partie d'engagement et la seconde partie d'engagement.

10. Procédé d'apprentissage d'un robot à liaison parallèle incluant : une base (12) ; un corps mobile (13) disposé verticalement au-dessous de la base (12) ; au moins trois mécanismes de liaison (11), dont chacun connecte la base et le corps mobile et inclut une jonction entre la base et le corps mobile ; une source d'entrainement (16) disposée dans la base et déplaçant le corps mobile relativement à la base en fléchissant chacun des au moins trois mécanismes de liaison au niveau de la jonction, et une unité de suspension connectant la base (12) et le corps mobile (13) de sorte qu'une une force résistant à la gravité soit ajoutée sur le corps mobile par l'unité de suspension (17) s'étendant et se contractant elle-même, le procédé étant **caractérisé par le fait qu'**il consiste à :

    - stocker, dans une unité de stockage (103), un statut d'opération du corps mobile, en tant qu'informations d'opération pour un apprentissage, dans un état dans lequel la source d'entrainement est dans un état de non entrainement.

11. Procédé d'apprentissage d'un robot à liaison parallèle selon la revendication 10 :

    - pour lequel le robot à liaison parallèle inclut un détecteur (102) détectant un état d'engagement entre la base et le corps mobile, l'état d'engagement étant créé en utilisant l'unité de suspension (17) ; et
    - le détecteur (102) place la source d'entrainement dans l'état de non entrainement après une détection de l'état d'engagement entre la base et le corps mobile, l'état d'engagement étant créé en utilisant l'unité de suspension.

12. Procédé d'apprentissage d'un robot à liaison parallèle selon la revendication 11 :

    - pour lequel le détecteur (102) détecte l'état d'engagement en détectant un courant circulant dans un circuit fermé configuré par l'engagement entre la base et le corps mobile, l'état d'engagement étant créé en utilisant l'unité de suspension.

90

103 104

Storage unit

Control unit

Drive-system power supply unit

Control-system power supply unit

101

10

17

12

16

14

17a

15

13a

13

FIG.2

10

12

14

17

17a

15

13a

13

FIG.4

FIG.6

FIG.7

# FIG.8

## FIG.9

## FIG.10

FIG.11

```
                    ┌──────────────────────┐
                    │        Start         │
                    └──────────────────────┘
                               │
                               ▼
        ┌──────────────────────────────────┐
        │            Servo OFF              │
        │            Brake ON              │──── s201
        └──────────────────────────────────┘
                               │
                               ▼
        ┌──────────────────────────────────┐
        │ Inform that teaching operation is possible │──── s202
        └──────────────────────────────────┘
                               │
          ┌──────────────────▼─────────┐
          │           ◇ s203
          │        ╱         ╲
          │      ╱  Engagement  ╲
       N  └─────◇   detected?    ◇
                  ╲             ╱
                    ╲         ╱
                       ▼ Y
        ┌──────────────────────────────────┐
        │       Possible to turn brake OFF │──── s204
        └──────────────────────────────────┘
                               │
                               ▼
        ┌──────────────────────────────────┐
        │    Inform that teaching is possible │──── s205
        └──────────────────────────────────┘
                               │
                               ▼
        ┌──┬───────────────────────────┬──┐
        │  │  Perform direct teaching  │  │──── s206
        └──┴───────────────────────────┴──┘
                               │
                               ▼
                    ┌──────────────────────┐
                    │         End          │
                    └──────────────────────┘
```

FIG.12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2880575 A
- JP 06270077 A
- FR 2880575 A1